# EUROPEAN PATENT APPLICATION

(11) **EP 4 813 558 A1**
(43) Date of publication of application: **30.09.2026**
(21) Application number: 26166247.2
(22) Date of filing: 19.03.2026
(51) Int. Cl.: B23K 20/12, B23K 101/00

(54) **METHOD AND SYSTEM FOR LINEAR SOLID STATE WELDING**

(30) Priority: 25.03.2025 US 202563777264 P
(71) Applicant: Cheng, Paul Po, London ON N6A 3S9 (CA)
(72) Inventor: Cheng, Paul Po, London ON N6A 3S9 (CA)
(74) Representative: Murgitroyd & Company

(57) **Abstract**

A system for bonding first and second metal workpieces together that includes a frame and a platform to which one of the workpieces is securable. The platform is attached to the frame by a fastener assembly that permits the platform to move relative to the frame along a predetermined oscillation path. The system also includes a locating assembly for locating the second workpiece in a predetermined position relative to the first workpiece to define a gap therebetween, when the first workpiece is secured to the platform. In addition, the system includes one or more gears positioned for engagement with the platform, for causing oscillating movement of the platform along the oscillation path when the gears are rotated. One of more heating elements are positionable in the gap, for heating respective heated portions of the first and second workpieces to a hot working temperature, at which the heated portions are plastically deformable.

## Description

### Cross-reference to other applications

The disclosure claims priority from US Provisional Application No. 63/777,264 filed March 25, 2025 which is hereby incorporated by reference.

### Field

The disclosure is generally directed at metallurgy and, more specifically, at a system and method for linear solid state welding.

### Background

In the prior art, linear friction welding may be used to weld two workpieces together. As is well known in the art, one or both workpieces are moved while surfaces thereof (referred to as faying surfaces) are engaged with each other, to generate heat. The heat is generated solely by friction. Once sufficient heat has been generated, the workpieces are subjected to a compressive force, to bond the two workpieces together.

However, because the faying surfaces are required to be at a high temperature in order for welding to be possible, the conventional friction welding requires substantial equipment that subjects the workpieces to substantial force (e.g., approximately 10 tons force per square inch).

Linear friction welding has a number of disadvantages. First, even with the relatively large equipment conventionally used, the largest area of the faying surfaces that is welded is about 15 square inches. As a practical matter, welding workpieces together over a larger area is not practicable.

Second, using conventional linear friction welding, the point at which the two workpieces bond together is not precisely controllable, with the result that the workpieces may be misaligned with each other when bonded together. Due to the misalignment, some further work is required, and it may be necessary to remove and discard some material.

Third, due to the relatively large size of the linear friction welding equipment, conventional linear friction welding may be utilized in only those circumstances in which the equipment can be accommodated.

Due to the relatively high costs involved and the other limitations outlined above, conventional linear solid state welding is usually only used in highly specialized applications, e.g., titanium parts for aerospace.

Therefore, there is provided a novel system and method for linear solid state welding that overcomes disadvantages of the prior art.

### Summary

For the foregoing reasons, there is a need for a system and a method for bonding workpieces together that overcomes or mitigates one or more of the defects or disadvantages of the prior art.

In its broad aspect, the disclosure provides a system for bonding first and second metal workpieces together. The system includes a frame and a platform to which one of the workpieces is securable. The platform is attached to the frame by a fastener assembly that permits the platform to move relative to the frame along a predetermined oscillation path.

The system also includes a locating assembly for locating the second workpiece in a predetermined position relative to the first workpiece to define a gap therebetween, when the first workpiece is secured to the platform. In addition, the system includes one or more gears positioned for engagement with the platform, for causing oscillating movement of the platform along the oscillation path when the gears are rotated. One of more heating elements are positionable in the gap, for heating respective heated portions of the first and second workpieces to a hot working temperature, at which the heated portions are plastically deformable.

While the heated portions are at the hot working temperature, and while one or both of the workpieces are oscillating relative to the other, the workpieces are urged together, to deform the heated portions and to bond the first and second workpieces together.

In another aspect of the disclosure, there is provided a system for bonding a first metal workpiece and a second metal workpiece together, the system including a frame; a platform to which the first workpiece is securable; at least one fastener assembly connecting the platform to the frame, said at least one fastener assembly permitting the platform to move relative to the frame along a predetermined oscillation path; a locating assembly, for locating the second workpiece in a predetermined position relative to the first workpiece to define a gap therebetween when the first workpiece is secured to the platform; at least one gear including a plurality of teeth and mounted for rotation about an axis thereof, said at least one gear being positioned for engagement with the platform, for oscillating movement of the platform along the predetermined oscillation path; at least one heating element, to be positioned in the gap, for heating respective heated portions of the first and second workpieces to their hot working temperatures at which the heated portions are at least partially plastically deformable, said at least one heating element being removable from the gap when the heated portions are at their hot working temperatures; and apparatus for urging the first and second workpieces against each other, while the heated portions are at their hot working temperatures and while the first workpiece is oscillated along the predetermined oscillation path, to bond the first and second workpieces together.

**In** another aspect, the at least one gear includes a first gear positioned for engagement with a first side of the platform; and a second gear positioned for engagement with a second side of the platform that is opposite to the first side thereof; the first and second gears being coordinated to cause oscillation of the platform along the predetermined oscillation path. In a further aspect, the at least one gear includes a first gear positioned for engagement with a first side of the platform, for intermittent movement of the platform in a first direction; and the system additionally includes a resilient element positioned for engagement with a second side of the platform that is opposed to the first side thereof, for resiliently responding to the movement of the platform in the first direction by urging the platform in a second direction opposite to the first direction.

In another aspect of the disclosure, there is provided a system for bonding a first metal workpiece to a second metal workpiece including a platform for receiving the first metal workpiece, the platform including at least one projection on one side of the platform; a locating assembly for receiving the second metal workpiece and for locating the second metal workpiece in a predetermined position to define a gap between the first and second metal workpieces; at least one gear positioned to a side of the platform, the at least one gear including a set of gear teeth and teeth gaps between the set of gear teeth for receiving the projection; an apparatus for rotating the at least one gear causing the projection to travel between the set of gear teeth and teeth gaps; at least one heating element located in the gap between the first and second metal workpieces to heat heated portions of the first and second metal workpieces to their hot working temperatures; wherein when the heated portions are at their hot working temperatures. rotation of the at least one gear causes the platform to move along a predetermined oscillation path causing edges of the first and second metal workpieces to bond or fuse together.

In yet another aspect, the apparatus further includes an apparatus for forcing the first and second metal workpieces together while the edges of the first and second metal workpieces are bonding or fusing together. In yet a further aspect, the apparatus further includes a second projection located on a side of the platform opposite the at least one projection; and a second gear, the second located on a side of the platform opposite the at least one gear, the second gear including a set of gear teeth and teeth gaps between the set of gear teeth for receiving the second projection; and a second apparatus for rotating the at second gear causing the second projection to travel between the set of gear teeth and teeth gaps of the second gear. In another aspect, when the at least one projection is located in one of the teeth gaps for the at least one gear, the second projection abuts one of the gear teeth of the second gear. In a further aspect, when the at least one projection is located in one of the teeth gaps for the at least one gear, the second projection is located in one of the teeth gaps of the second gear.

Accordingly there is provided systems as detailed in the claims that follow.

### Brief Description of the Drawings

The disclosure will be better understood with reference to the attached drawings, in which:
Fig. 1 is a top view of an embodiment of a system of the disclosure including a platform on which a workpiece (not shown in Fig. 1) is securable, the platform being shown pushed to the right as illustrated in Fig. 1;
Fig. 2 is another top view of the system of Fig. 1 in which the platform of the disclosure is shown pushed to the left as illustrated in Fig. 2;
Fig. 3A is an end view of the platform of Figs. 1 and 2 with a first workpiece positioned thereon and a second workpiece positioned to define a gap therebetween;
Fig. 3B is a side view of the system and the two workpieces of Fig. 3A;
Fig. 4 is a side view of the platform of Figs. 1-3 in which the two workpieces are urged together;
Fig. 5 is a side view of the two workpieces of Figs. 3A-4 bonded together;
Fig. 6A is a top view of an alternative embodiment of the system of the disclosure in which the platform of the system is shown being pushed to the right as illustrated in Fig. 6A;
Fig. 6B is a top view of the system of Fig. 6A in which the platform is shown being pushed to the left as illustrated in Fig. 6B;
Fig. 7 is a top view of another embodiment of the system of the disclosure;
Fig. 8A is a top view of an alternative embodiment of the system of the disclosure, in which a platform thereof is urged to rotate in a clockwise direction;
Fig. 8B is a top view of the system of Fig. 8A in which the platform thereof is urged to rotate in a counter-clockwise direction;
Fig. 9A is a side view of another embodiment of the system of the disclosure;
Fig. 9B is a top view of a portion of the system of Fig. 9A;
Fig. 10A is a top view of another embodiment of the system of the disclosure, mounted to two segments of rail;
Fig. 10B is a side view of a portion of the system of Fig. 10A, drawn at a larger scale; and
Fig. 11 is a side view of another alternative embodiment of the system of the disclosure.

### DETAILED DESCRIPTION

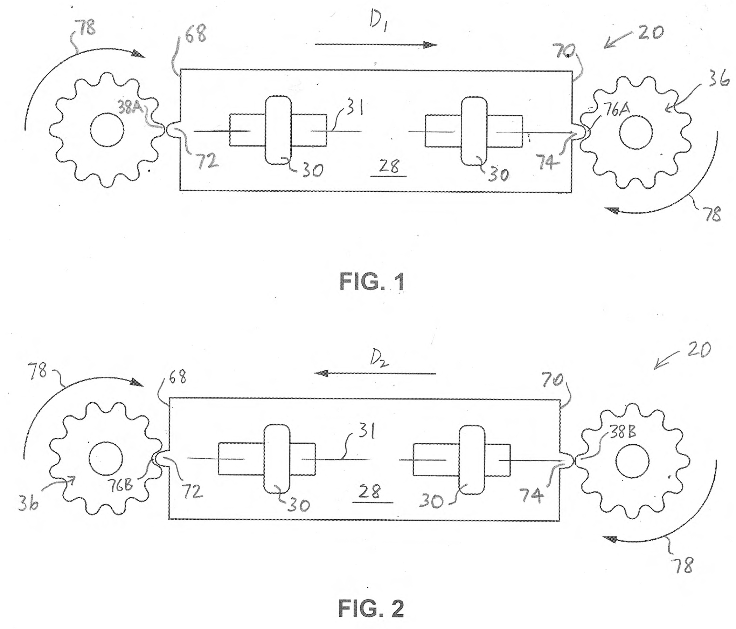

In the attached drawings, like reference numerals designate corresponding elements throughout. Reference is first made to Figs. 1-5 to describe an embodiment of a system in accordance with the disclosure indicated generally by the numeral 20.

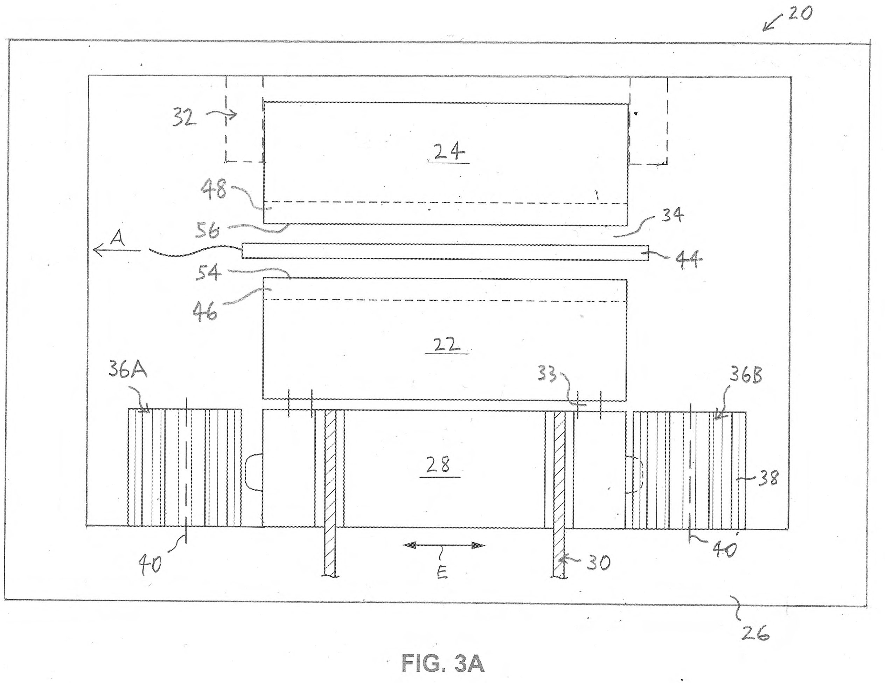

As will be described, the system 20 is for bonding a first metal workpiece 22 and a second metal workpiece 24 together (Fig. 3A).

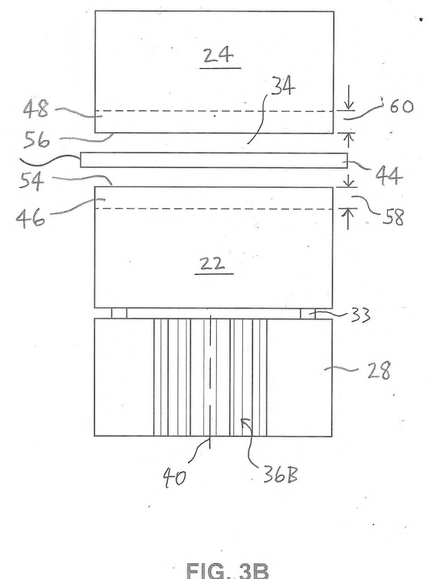

In one embodiment, the system 20 includes a frame 26 and a platform 28 on which a selected one of the first and second workpieces 22, 24 is securable (Figs. 3A, 3B). As can be seen in Figs. 3A and 3B, the first workpiece 22 is selected to be secured to the platform 28. Those skilled in the art would appreciate that a suitable support device 33 secures the first workpiece 22 to the platform 28 so that the first workpiece 22 moves with the platform 28. The system 20 also includes one or more fastener assemblies 30 that connect the platform 28 with the frame 26. As will be described, the fastener assemblies 30 permit the platform 28 to move relative to the frame 26 along a predetermined oscillation path 31 (Figs. 1, 2).

In some embodiments, the system 20 includes a locating assembly 32 for locating the second workpiece 24 in a predetermined position relative to the first workpiece 22 to define a gap 34 (Fig. 3A) between the first and second workpieces 22, 24. It will be understood that suitable rollers or other means for reducing friction (not shown) may be located between the platform 28 and the frame 26 enabling lower or less friction during movement between the platform 28 and the frame 26.

In use, the platform 28 is oscillated along the oscillation path 31 by any suitable means. The direction of oscillations (i.e., along the oscillation path 31) is further indicated by arrow "E" in Fig. 3A.

As can be seen in Figs. 1-3B, in one embodiment, the system 20 also includes two or more smooth shaped gears 36. Each of the gears 36 includes a plurality of teeth 38, and is mounted for rotation about an axis 40 thereof (Figs. 3A, 3B).

The gears 36 are positioned for engagement with the platform 28, for causing the platform 28 to oscillate. As will be described, the gears 36, when rotating about their respective axes 40, cause oscillating movement of the platform 28 along the oscillation path 31. Although not shown, those skilled in the art would appreciate that a suitable means is provided for rotating the gears 36 about their respective axes 40 (Fig. 3A).

As can be seen in Figs. 3A and 3B, the system 20 may also include one or more heating elements 44, for heating areas, which may be referred to as heated portions, 46, 48 of the first and second workpieces 22, 24 respectively. It is preferred that the heated portions 46, 48 are heated to a hot working temperature using induction heating.

As shown in the current embodiment, the heating elements 44 are positioned in the gap 34, for heating the heated portions 46, 48 to their hot working temperature, at which the heated portions 46, 48 are at least partially plastically deformable. When the heated portions 46, 48 are at their hot working temperature, then the heating elements 44 are removed from the gap 34. If the first and second workpieces are the same material, the hot working temperature may be the same for both workpieces, however, if the first and second workpieces are different materials, their hot working temperatures may be different.

The system 20 may also include an apparatus or system (not shown) for urging the first and second workpieces 22, 24 against each other, as will be described.

In one embodiment of use, after the first workpiece 22 is secured to the platform 28, the second workpiece 24 is positioned by the locating assembly 32 relative to the first workpiece 22, to define the gap 34 therebetween. The one or more heating elements 44 are positioned in the gap 34, and the heating elements 44 are then energized. As noted above, the heating elements 44 heat the heated portions 46, 48, such as, but not limited to, by induction heating to their hot working temperatures thereof, at which the heated portions 46, 48 are plastically deformable.

In one embodiment, the gears 36 engage the platform 28 to oscillate the first workpiece 22 relative to the second workpiece 24 before the workpieces 22, 24 engage each other. The gears 36 may engage the platform 28 to begin oscillation thereof after the heated portions 46, 48 have been heated to their hot working temperatures.

In an alternative embodiment, the second workpiece 24 may be oscillated while the first workpiece 22 is also oscillated. It will be understood that the apparatus or system for oscillating the second workpiece is omitted from Figs. 3A and 3B, for clarity of illustration.

The exemplary predetermined oscillation path 31 that is illustrated in Figs. 1 and 2 is linear, i.e., straight. However, it will be understood that, in alternative embodiments, the predetermined oscillation path 31 may have any suitable nonlinear configuration.

As can be seen in Figs. 3A and 3B, in one embodiment, the workpieces 22, 24 may have respective substantially planar surfaces 54, 56. When the first workpiece 22 is secured to the platform 28 and the second workpiece 24 is positioned to define the gap 34 between the workpieces 22, 24, the planar surfaces 54, 56 are located opposed to, or facing, each other.

As illustrated in Figs. 3A and 3B, in one embodiment, the heated portions 46, 48 extend from each respective surface 54, 56 into the respective workpieces. Specifically, the heated portion 46 extends a first distance 58 from the surface 54 into the first workpiece 22, and the heated portion 48 extends a second distance 60 from the surface 56 into the second workpiece 24 (Fig. 3B). It will be understood that the heated portions 46, 48 extend laterally, i.e., they extend in parallel to the surfaces 54, 56 respectively, along the entire width and length of each workpiece 22, 24 adjacent to the surfaces 54, 56 respectively.

Once the workpieces 22, 24 are positioned to define the gap 34 between the two surfaces 54, 56, one or more of the heating elements 44 are positioned in the gap 34. The at least one heating element 44 is spaced apart from the surfaces 54, 56 by predetermined distances respectively. Those skilled in the art would appreciate that the heating elements are selected, and positioned the predetermined distances apart from the surfaces 54, 56, in order to heat the respective heated portions 46, 48 uniformly to their hot working temperatures. The predetermined distances are determined to enable the heating elements 44 to be located at an optimum or predetermined location in the gap 34, for heating the heated portions 46, 48 uniformly, or substantially uniformly, to their hot working temperatures.

As noted above, once the at least one heating element(s) 44 is/are at the predetermined distances from the respective surfaces 54, 56, the heating elements 44 are then energized, to heat the heated portions 46, 48 to the hot working temperature. Preferably, the heated portions 46, 48 (including the surfaces 54, 56) are in an inert (non-oxidizing) atmosphere, when the heated portions 46, 48 are heated to their hot working temperatures. Those skilled in the art would appreciate that the non-oxidizing atmosphere may be temporarily contained inside a suitable envelope or container 65 (Fig. 3B). It will be understood that the envelope 65 is omitted from the drawings other than Fig. 3B for clarity of illustration.

Those skilled in the art would also appreciate that the hot working temperature may vary, depending upon the material that is heated. For example, the hot working temperature for steel may vary from about 1,100°C (2,012°F)to about 1,300°C (2,372°F). For other metals, the hot working temperature may vary over a wide range, e.g., from about 600°C for aluminum to about 1,800°C for zirconium.

Once the heated portions 46, 48 are at their hot working temperatures, the heating elements 44 are removed from the gap 34. The heating elements 44 may be removed, for example by any suitable means or apparatus (not shown).

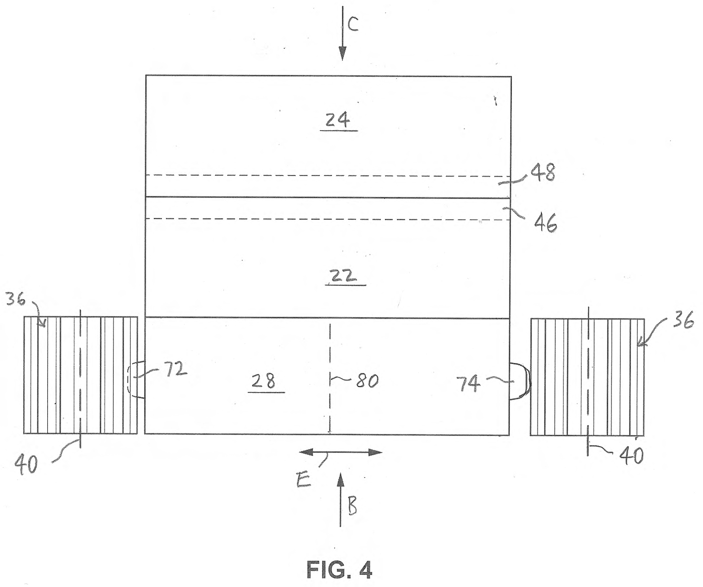

In one embodiment, while the heated portions 46, 48 are at their hot working temperatures, one or both of the workpieces 22, 24 are oscillated, and continue to oscillate after surfaces 54, 56 are engaged, and the workpieces 22, 24 are urged against each other. The workpieces 22, 24 are urged against each other by forces directed against the workpieces 22, 24, represented by arrows "B" and "C" in Fig. 4.

In one embodiment, the platform 28 preferably is oscillated in one plane, i.e., the platform 28 is rapidly and alternately moved to the left and to the right, as illustrated in Fig. 3A, i.e., in the directions indicated by arrow "E" in Fig. 3A. When the workpieces 22, 24 are engaged to each other, and while the heated portions 46, 48 are at the hot working temperature, the oscillation is in a direction parallel to the planes defined by the engaged surfaces 54, 56.

The workpieces 22, 24 may be pushed together by any suitable means or apparatus. For instance, the suitable apparatus may be a hydraulic ram or a set of at least one servo electrical motors that may push against the second workpiece 24 in the direction indicated by arrow "C" whereby the frame 26 may support the platform 28 and thereby exert an equal and oppositely-directed force, in the direction indicated by arrow "B". Accordingly, while the heated portions 46, 48 are at their hot working temperatures, they are pushed against each other, and one or both of the workpieces 22, 24 is/are moved (i.e., oscillated) relative to the other, such engagement and oscillation causing plastic deformation of at least part of the heated portions 46, 48 to take place. It is believed that this results in recrystallization of all, or substantially all, of the material in the heated portions 46, 48, which causes the workpieces 22, 24 to be bonded together at their respective surfaces 54, 56 as the heated portions 46, 48 cool from their respective hot working temperatures.

Alternatively, the workpieces 22, 24 may be oscillated after the surfaces 54, 56 are engaged with each other and pressed against each other, and while the heated portions 46, 48 are at the hot working temperature. In this embodiment, the recrystallization is achieved because the heated portions 46, 48 are engaged with each other and one or both of the workpieces 22, 24 are oscillated while the heated portions 46, 48 are at the hot working temperature, causing plastic deformation of at least parts of the heated portions 46, 48.

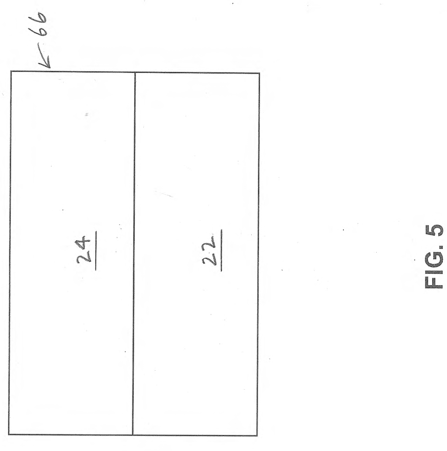

The result is a unitary product 66 (Fig. 5), made of the first and second workpieces 22, 24, fused or bonded together. The joined surfaces 54, 56 define a plane "P" at which they are joined together.

In one embodiment, the system includes two or more gears. Two gears are identified in Fig. 3A by reference characters 36A, 36B for clarity. As can be seen in Fig. 3A, the first gear 36A is positioned for engagement with a first side 68 of the platform 28, and the second gear 36B is positioned for engagement with a second side 70 of the platform 28 that is opposite to the first side 68. The first and second gears 36A, 36B are coordinated to cause oscillation of the platform 28 along the predetermined oscillation path 31. For clarity of illustration, the axes of the gears 36A, 36B are identified in Fig. 3A by reference characters 40A and 40B respectively.

As can be seen in Figs. 1-3B, in one embodiment, the first and second sides 68, 70 include projections 72, 74. The positioning of the gears relative to the platform 28 as illustrated in Figs. 1 and 2 is exemplary. In Fig. 1, for example, the gear 36A on the left has a set of teeth 38, with one tooth 38A engaged with the projection 72. At the same time, the gear 36B on the right is positioned so that a space 76A between adjacent teeth 38 receives the projection 74 on the second side 70 of the platform 28. In Fig. 1, the gears 36 rotate about their respective axes in the directions shown by arrows 78. In one embodiment of operation, the gears 36 rotate about their respective axes in the same direction (e.g., clockwise or counter-clockwise) and at the same speed. In other embodiments, the gears may rotate in opposite directions with their speed synchronized when identical gears are used.

It will be understood that certain elements are omitted from certain drawings, for clarity of illustration. For example, the workpieces 22, 24 are omitted from Figs. 1 and 2.

As can be seen in Fig. 1, when the gears 36 rotate in the direction indicated by arrows 78, the tooth 38A is brought into contact with the projection 72, and simultaneously, the tooth space 76A is positioned to allow the projection 74 to be received in the tooth space 76B. As illustrated in Fig. 1, the platform 28 is urged in the direction indicated by arrow "D₁" as a result.

Accordingly, and as can be seen in Fig. 2, when the left gear 36A rotates sufficiently to present a tooth gap 76A opposite to the first projection 72, a tooth 38B on the gear 36B on the right-hand side has simultaneously moved to engage the projection 74. Those skilled in the art would appreciate that the platform 28 is at that time urged in the direction indicated by arrow "D₂". As can be seen in Figs. 1 and 2, continuous rotation of the gears 36 results in the platform 28 being urged to move continuously, in the directions indicated by arrow "D₁" and arrow "D₂". This pattern is repeated to cause the platform 28 to oscillate about a central axis 80 (Fig. 4) along the oscillation path 31.

As illustrated in the current embodiment, the platform 28 has only a single projection 72, 74 included in each side 68, 70 thereof. Alternatively, the gears 36 may engage flat sides of the platform, in the absence of the projections. Those skilled in the art would appreciate that the platform 28 may, alternatively, have a number of projections on each side of the platform 28, with a corresponding number of gears engaged therewith respectively, as will be described. For example, the platform 28 may be sufficiently large to accommodate a predetermined number of gears (not shown) along each side of the platform 28, with the gears positioned so that their respective axes are parallel. Alternatively, the platform may be sufficiently thick or deep that a number of gears may engage the platform, with the axes thereof aligned with each other.

From the foregoing, it can be seen that the oscillation of the platform 28 is assisted by or due to engagement of the gears 36 with the platform 28 in a synchronized alternating pattern, in which the tooth 38A of the gear 36A engages the projection 72 on the first side 68 of the platform 28 at the same time as a tooth gap 76A engages the projection 74 on the second side 70 and then vice versa as the gears 36 rotate causing the platform to oscillate in the direction indicated by arrow "D₁" and then the direction indicated by arrow "D₂". The oscillation resulting is tightly controlled by the gears 36A, 36B, which rotate about their respective axes at the same speed.

In some embodiments, the amplitude of the oscillation may be relatively small, e.g., between approximately 0.5 mm and 1 mm and the frequency of the oscillation may be, for example, approximately 30 Hz to approximately 60 Hz, but may be as low as between at least approximately 1 Hz and approximately 20 Hz.

In addition, it is believed that the oscillation may continue over a relatively short or predetermined time period. As an example, the oscillation may continue, while the workpieces 22, 24 are engaged with each other, such as for approximately three seconds.

The teeth 38 of the gears 36 and the projections 72, 74 are formed, and appropriate lubricants are utilized, to minimize or reduce friction when the gears 36 are engaged with the projections 72, 74. In an alternative embodiment (not shown), the platform 28 may include rollers that are rotatably mounted on the platform 28 at the sides 68, 70 thereof, for engagement of the rollers with the gears 36.

The gears may also be formed to provide a desired amplitude of the oscillation, and frequency. It will be understood that the gears as illustrated are only exemplary. Those skilled in the art would appreciate that the gears may have any suitable tooth proportions and tooth profiles, and any suitable rotation speeds. For example, it is believed that teeth with somewhat flatter profiles would tend to reduce friction between the gear and the projection.

When the workpieces 22, 24 are initially engaged, a relatively small amount of pressure is applied, e.g., approximately one to two tons force per square inch. Due to the relatively low pressure that is used to bond the two workpieces together, and also due to the relatively small amplitude of the oscillation, fine control of the movement of one workpiece relative to the other is feasible in the short time period between their initial engagement and their bonding.

Those skilled in the art would also appreciate that controlling the system so that the edges of the workpieces 22, 24 are substantially aligned at the moment when the workpieces 22, 24 become bonded together may be difficult to achieve, in practice. However, depending on the circumstances, a commercially optimal result may be achieved by stopping the oscillation at a point shortly before the workpieces are bonded together, but when the edges of the workpieces are aligned, thereby minimizing or reducing the reworking that may be needed. Alternatively, a commercially optimal result may be achieved in other circumstances by allowing the oscillations to continue until the workpieces are bonded or fused with each other, at which point the edges thereof may not be aligned, and some reworking therefore may be needed subsequently. In this alternative scenario, although the workpieces may not be aligned when bonding occurs, the amount of reworking required is minimal or limited, compared to the amount of reworking typically required when conventional linear solid state welding is utilized.

From the foregoing, it can be seen that, because the heated portions of the workpieces are heated to their hot working temperatures and the heated portions are consequently subject to plastic deformation, the amount of energy required for pressing the workpieces 22, 24 together while oscillation takes place is substantially less than the energy that is required for conventional linear friction welding. In contrast with conventional linear friction welding, in which most of the energy inputs are consumed in causing movement of one or both of the workpieces while engaged with each other, in the disclosure herein, most of the energy inputs are consumed in energizing the heating elements, to heat the heated portions to their hot working temperatures. It is estimated that, in the method of the disclosure herein, the energy required for pressing the workpieces together is less than the energy that is required for conventional linear friction welding.

Accordingly, the equipment needed for engaging the workpieces together in the method of the disclosure is substantially smaller or less than the equipment required for conventional linear friction welding. In addition, larger areas of workpieces may be bonded together. Also, because less force is applied to achieve bonding, more precise control of the movement of the workpieces after their initial engagement is possible or achievable.

As shown, the platform 28 as illustrated in Figs. 1-4 is substantially flat, i.e., its top and bottom surfaces are planar. However, those skilled in the art would appreciate that the platform may be convex or concave or may have any other suitable profile. In some embodiments, the surfaces of the platform may be shaped in order to result in a predetermined oscillation path that is curved. A curved oscillation path may be required, for example, to conform to a curved surface of one or more workpieces.

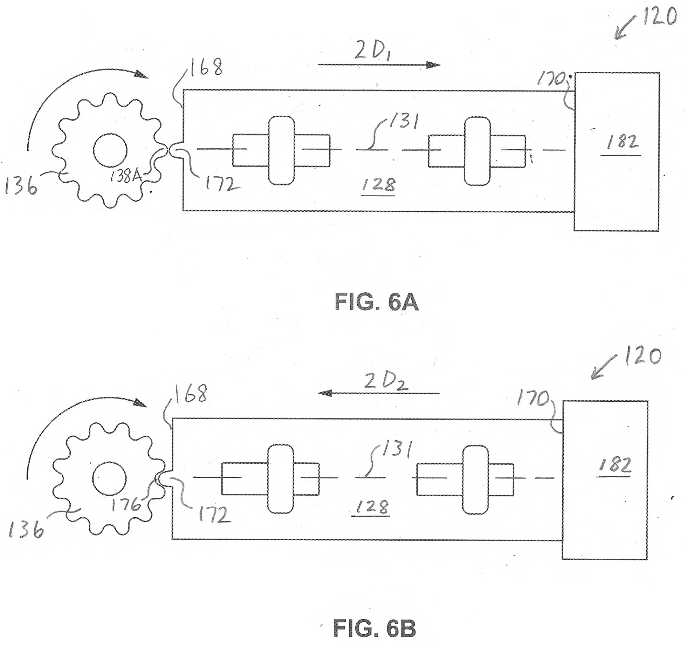

In another embodiment illustrated in Figs. 6A and 6B, the system 120 includes one or more gears 136 located on a selected side 168 of the platform 128, and one or more resilient elements 182 located on an opposite side 170 of the platform 128. In this embodiment, the engagement of the tooth 138A with a projection 172 urges the platform 128 in a direction indicated by arrow "2D₁" as indicated in Fig. 6A. Because the element 182 is resilient and compressible, it is somewhat compressed by such movement, and when the gear 136 rotates to present a tooth space 176 into which the projection 172 is receivable, the resilient element 182 pushes or decompresses the platform 128 in the direction indicated by arrow "2D₂" (Fig. 6B).

Those skilled in the art would appreciate that rotating the gear 136 about its axis rapidly results in oscillation of the platform 128 along a predetermined oscillation path 131.

Unlike the embodiment described above, those skilled in the art would also appreciate that the system 120 may be utilized, for example, in a relatively small space, in which gears at each end of the platform are not easily accommodated.

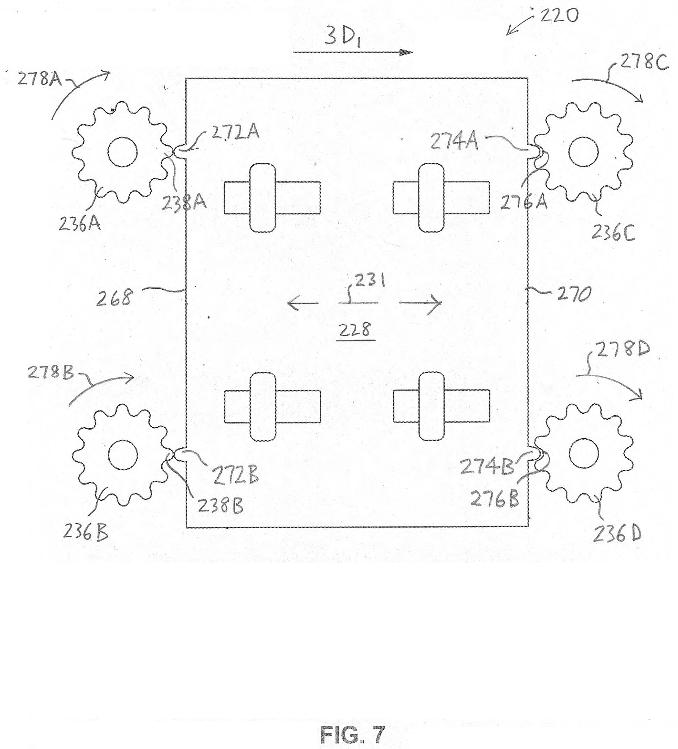

Another embodiment of the system 220 of the disclosure is illustrated in Fig. 7. In Fig. 7, the system 220 includes first gears 236A, 236B engaged with a first side 268 of a platform 228, and second gears 236C, 236D engaged with a second side 270 of the platform 228. As will be described, the rotation of the first gears and the second gears is coordinated to cause oscillation of the platform 28 along an oscillation path 231.

As can be seen in Fig. 7, the first side 268 includes projections 272A, 272B, and the second side 270 includes corresponding projections 274A, 274B. Although shown as rounded projections, it is understood that the profile of the projections may be other shaped (i.e. roller bearing) but able to engage with the tooth and tooth space of the corresponding gears. The gears 236A, 236B include respective teeth 238A, 238B that engage the projections 272A, 272B. At the same time, the gears 236C, 236D as positioned so that tooth spaces 276A, 276B receive the projections 274A, 274B respectively. The gears 236A, 236B, 236C, and 236D all rotate about their respective axes in the directions shown by arrows 278A-278D respectively.

It will be understood that a number of elements are omitted from Fig. 7 for clarity of illustration. For instance, the workpieces 22, 24 are omitted.

As can be seen in Fig. 7, when the gears 236A-236D rotate in the directions indicated by the arrows 278A-278D respectively, the teeth 238A and 238B are brought into contact with the projections 272A, 272B at substantially the same time. At the same time, or at substantially the same time, the gears 236C, 236D are positioned to allow the projections 274A, 274B to be received in the teeth spaces 276A, 276B respectively. As illustrated in Fig. 7, the platform 228 is urged in the direction indicated by arrow "3D₁" as a result.

Those skilled in the art would appreciate that, when the gears 236A-236D rotate, tooth spaces on the gears 236A, 236B are presented for receiving the projections 272A, 272B respectively, and at the same time (or at substantially the same time), teeth on the gears 236C, 236D engage the projections 274A, 274B respectively. When this happens, the platform 228 is moved in a direction opposite to the direction "3D₁". When such movements are repeated, the platform 231 is moved along the oscillation path 231, e.g., to the right and then to the left and back again.

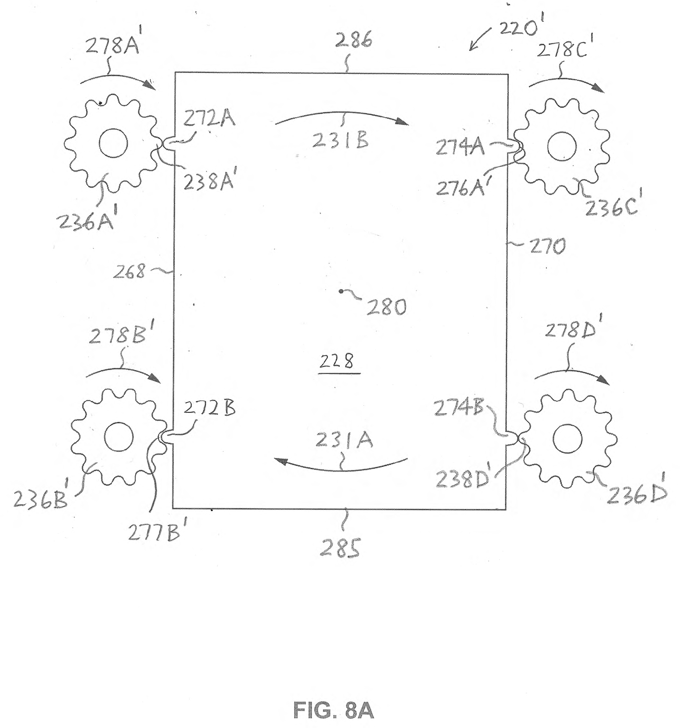

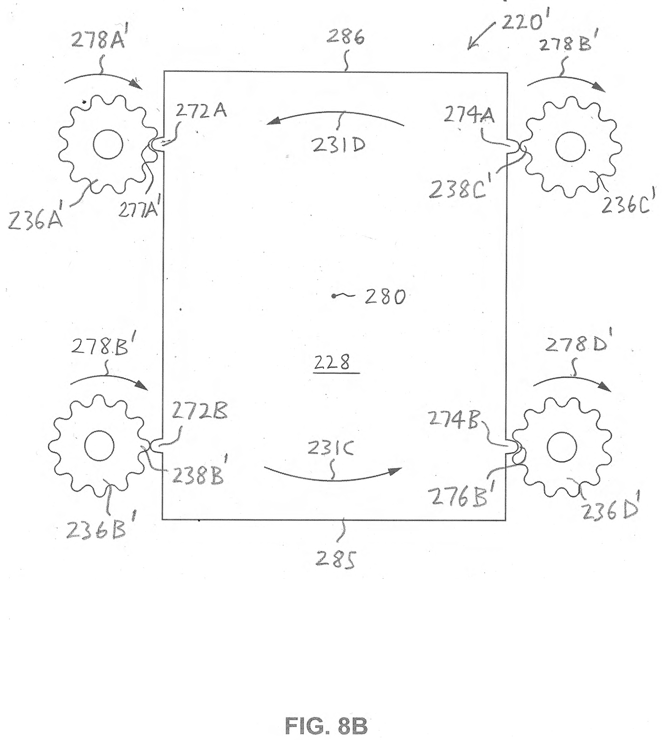

Another embodiment of the system 220' of the disclosure is illustrated in Figs. 8A and 8B. The system 220' includes first gears 236A', 236B' engaged with a first side 268 of the platform 228, and second gears 236C', 236D' engaged with a second side 270 of the platform 228. As will be described, the rotation of the first gears and the second gears is coordinated to cause oscillation of the platform 228 along oscillation paths 231A, 231B.

As can be seen in Figs. 8A and 8B, the first side 268 includes projections 272A, 272B, and the second side 270 includes corresponding projections 274A, 274B. The gears 236A', 236B', 236C', and 236D' all rotate about their respective axes in the directions shown by arrows 278A'-278D' respectively.

The system 220' is substantially the same as the system 220, except that the gears on each side 268, 270 of the platform 228 are out of phase with each other. For example, in the circumstances illustrated in Fig. 8A, when the tooth 238A' of the gear 236A' engages the projection 272A, a tooth space 277B' of the gear 236B' receives the projection 272B. Similarly, when the tooth space 276A' of the gear 236B' receives the projection 274A, the tooth 238D' of the gear 236' engages the projection 274B.

As indicated in Fig. 8A, when the tooth 238D' of the gear 236D' engages the projection 274B, the gear 236B' is located to position the tooth space 277B' for receipt of the projection 272B in the tooth space 277B'. Due to these two events, occurring at the same time (or at substantially the same time), a first part 285 of the platform 228 tends to move to the left, in the embodiment illustrated in Fig. 8A.

Similarly, at the same instance in time, the tooth 238A of the gear 236A' engages the projection 272A such that the gear 236C' positions a tooth space 276A for receipt of the projection 274A therein. Due to these two events, a second part 286 of the platform 228 tends to move to the right, in the embodiment illustrated in Fig. 8A.

As noted above, the gears 236A'-236D' rotate about their respective axes (not shown) at the same speed. As a result, the first part 285 is urged to the left (as indicated by arrow 231A) at the same time (or at substantially the same time) as the second part 286 is urged to the right (as indicated by arrow 231B).

Because the first part 285 is urged to the left (as illustrated in Fig. 8A) at the same time as the second part 286 is urged to the right (as illustrated in Fig. 8A), the platform 228 tends to pivot about a central pivot point 280, in a clockwise direction. It will be understood that, when the gears are in the positions thereof shown in Fig. 8A, the result of such rotation is that the first part 285 is urged to the right, and the second part 286 is urged to the left.

Different circumstances are illustrated in Fig. 8B, in which the gears 236A'-236D' have been rotated from their respective positions shown in Fig. 8A to respective positions in which the gears 236A'-236D' urge the first part 285 to the right, and urge the second part 286 to the left, to cause the platform 228 to pivot about the central pivot point 280 in a counter-clockwise direction. In Fig. 8B, the first part 285 is urged to the right, as indicated by arrow 231C, and the second part 286 is urged to the left, as indicated by arrow 231D.

A tooth 238C' on the gear 236C' engages the projection 274A, and at the same time, the gear 236A' presents a tooth space 277A' in which the projection 272A is received (Fig. 8B). Because of these two events, occurring at the same time (or at substantially the same time), the second part 286 of the platform 228 is urged to the left, as illustrated in Fig. 8B. A tooth 238B' on the gear 236B' engages the projection 272B, and at the same time, the gear 236D' presents a tooth space 276B' in which the projection 274B is received. As a result, the first part of the platform 228 is urged to the right, as illustrated in Fig. 8B.

The net result is that, in the circumstances illustrated in Fig. 8B, the platform 228 is caused to pivot about the central pivot point 280 in a counter-clockwise direction.

From the foregoing, it can be seen that, in the system 220', the platform 228 is caused to be moved so as to oscillate about the central pivot point 280. It will be understood that workpieces and other elements such as heating elements and a container for holding a non-oxidizing atmosphere are omitted from Figs. 8A and 8B for clarity of illustration.

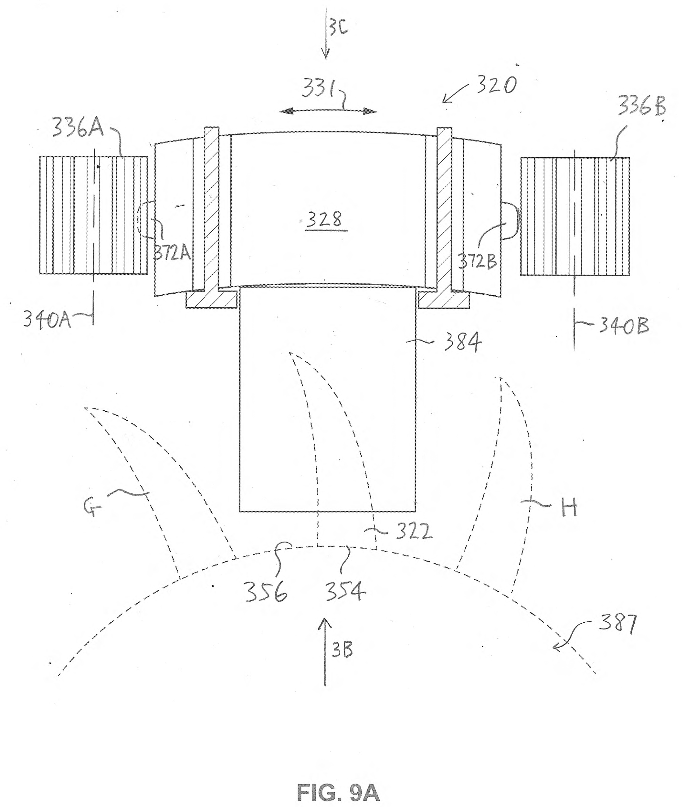

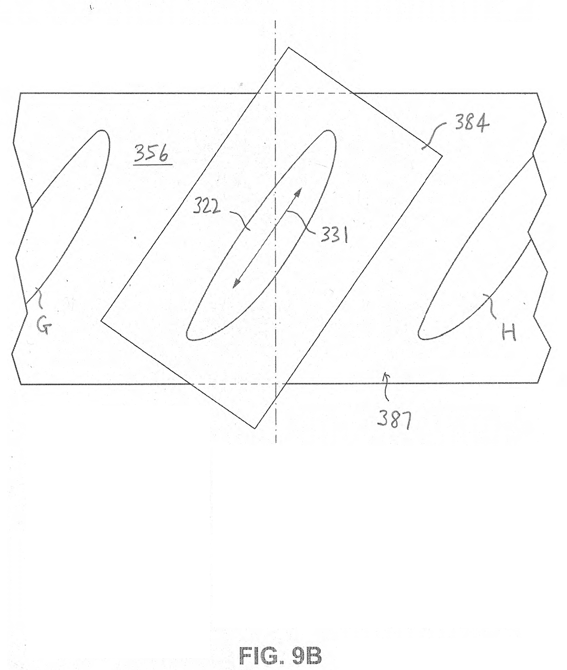

Another embodiment of the system 320 of the disclosure is illustrated in Figs. 9A and 9B. The system 320 include a jig 384 formed to hold a first workpiece 322, for oscillation of the first workpiece 322 along a predetermined oscillation path 331. The oscillation of the first workpiece 322 is relative to a second workpiece that may be, e.g., a hub 387 of a turbine (not shown).

The hub 387 may be formed for rotation thereof about a hub axis 388 (Fig. 9B). The hub 387 has a surface 356 onto which the workpiece 322 is to be bonded. The hub's surface 356 may have a convex curvature (Fig. 9A). Where the surface 356 is curved, the workpiece 322 preferably also has a curved surface 354 formed to mate with the surface 356 of the hub 387 (Fig. 9A). The jig 384 is also curved, to cause the oscillation path to follow the profile of the hub surface 356 into and out of the page.

As can be seen in Fig. 9A, in one embodiment, the jig 384 is secured to a platform 328. In one embodiment, the system 320 includes gears 336A, 336B positioned for engagement with projections 372A, 372B, for oscillation of the platform 328 along an oscillation path 331 (Fig. 9A).

The second gear 336B has a tooth that engages the second projection 372B at the same time as the first projection 372A is received in a tooth space (not shown) of the first gear 336A. Rotation of the gears 336A, 336B about their respective axes 340A, 340B causes the platform 328 to oscillate along the predetermined oscillation path 331.

As can be seen in Fig. 9A, the jig 384 is mounted to the platform 328, and the workpiece 322 is securely held inside the jig 384. As a result, oscillation of the platform along the oscillation path 331 causes the workpiece 322 to oscillate also along the oscillation path 331.

It will be understood that the first workpiece 322 and the hub 387 are initially located relative to each other to define a gap (not shown) into which one or more heating elements (not shown) may be positioned. In a manner similar to that described above, heated portions (not shown) of the first workpiece 322 and the hub 387 are heated to hot working temperatures by the heating elements, in a non-oxidizing atmosphere. When the heated portions thereof are at their hot working temperatures (which may be the same or different or each component depending on a material of the component) and when one or both of the workpiece 322 and the hub 387 are oscillated relative to the other along the oscillation path 331, the heated portions are engaged, and pressed together, to cause shearing of the heated portions. The forces applied to press the first workpiece 322 onto the hub 387 are schematically represented by arrows "3B" and "3C" in Fig. 9A. The heated portions are allowed to cool, and the workpiece 322 and the hub 387 are fused or bonded together.

From the foregoing, it can be seen that the jig 384 facilitates oscillation of the first workpiece 322 and also movement thereof relative to the hub 387 (Fig. 9B). Those skilled in the art would appreciate that the temperature of the heated portions drops rapidly to below the hot working temperature, and once the engaged workpiece 322 and the hub 387 are bonded together, oscillation ceases.

In some embodiments, the jig 387 may be formed out of two or more prefabricated pieces.

As can be seen in Fig. 9A, in one embodiment, the platform 328 may have an elongate body, and the jig 384 may extend generally orthogonally from the body of the platform 328. Due to the position of the jig 384 in relation to the platform 328, the workpiece 322 may be positioned between two turbine blades that were previously mounted to the hub 387. For instance, in Fig. 9A, the workpiece 322 is located on the hub 387 between blades "G" and "H".

It will be understood that heating elements, a container for containing the non-oxidizing atmosphere, and other elements are omitted from Figs. 9A and 9B for clarity of illustration.

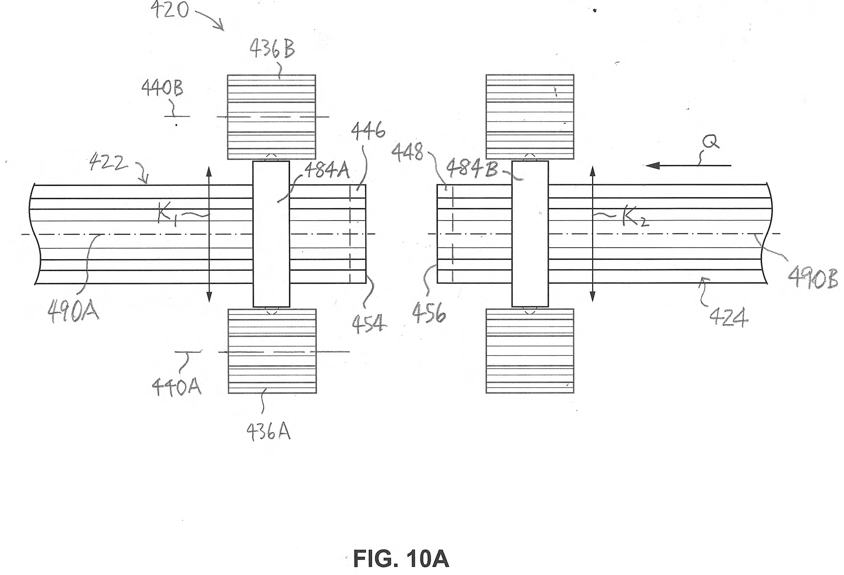

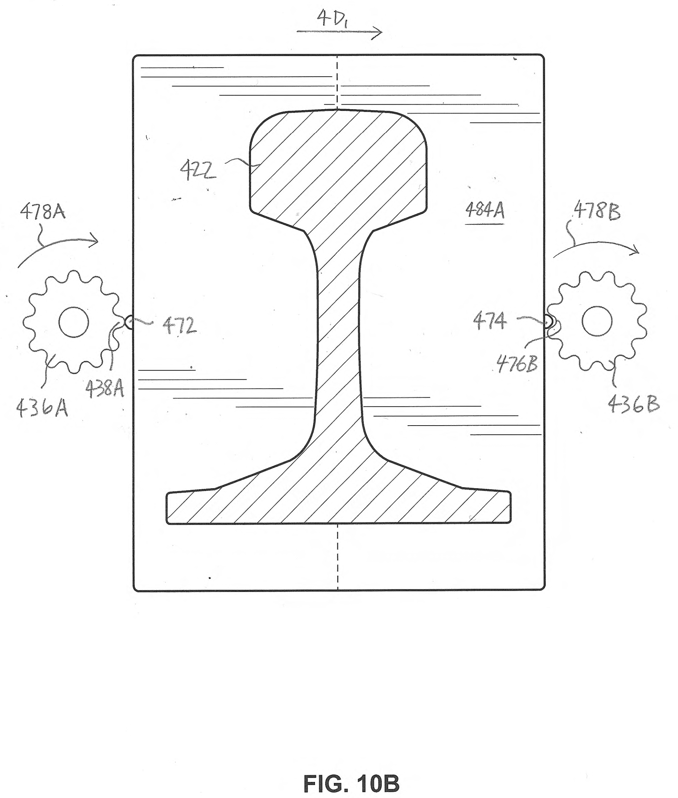

Another alternative embodiment of the system 420 of the disclosure is illustrated in Figs. 10A and 10B. In Fig. 10A, workpieces 422, 424 are shown, with jigs 484A, 484B positioned thereon respectively. In the exemplary embodiment illustrated in Figs. 10A and 10B, the workpieces are rails, to be joined to form part of a railway. It will be understood that respective surfaces 454, 456 of the workpieces 422, 424 are to be engaged with each other, while heated portions 446, 448 of the workpieces 422, 424 are at their hot working temperatures, and also while one or both of the workpieces are oscillating relative to the other workpiece.

The jigs 484A, 484B are intended to facilitate positioning and oscillation of the workpieces 422, 424 relative to each other. For example, in the embodiment illustrated in Fig. 10A, the first workpiece 422 may be oscillated by gears engaging the jig 484A while the second workpiece 424 may be held stationary.

As can be seen in Fig. 10A, the rails 422, 424 are positioned so that their respective axes 490A, 490B are aligned, with the surfaces 454, 456 facing each other. However, one or both of the first and second workpieces 422, 424 may be moved relative to the other, as indicated by arrows "K₁", "K₂" in Fig. 10A. The purpose of such relative motion is to cause one or both of the surfaces 454, 456 to be in motion relative to the other surface when the surfaces 454, 456 are pressed together, as will be described.

In generally the same manner as described above, the heated portions 446, 448 are heated to their hot working temperatures in a non-oxidizing atmosphere. While the heated portions 446, 448 are at their hot working temperatures, and while one or both of the surfaces 454, 456 are moving relative to the other, the surfaces 454, 456 are pushed together.

It will be understood that one or both of the workpieces 422, 424 may be moved axially toward the other workpiece, to push the surfaces 454, 456 together. However, for clarity of illustration, in Fig. 10A, only the second workpiece 424 is indicated to be moving axially, by arrow "Q".

The jig 484A and the gears engaged with it are illustrated in Fig. 10B. As can be seen in Fig. 10B, in one embodiment, a first gear 436A is positioned for engagement with a first projection 472 on the jig 484A, and a second gear 436B is positioned for engagement with a second projection 474.

The workpieces are positioned in preselected positions relative to each other using the jigs 484A, 484B. When the workpieces 422, 424 are in their preselected positions relative to each other, they define a gap 434 between the respective surfaces 454, 456 thereof, in which one or more heating elements (not shown in Fig. 10A) are receivable. It will be understood that heating elements are omitted from Figs. 10A and 10B, for clarity of illustration. Similarly to the processes described above, the heating elements are energized, to heat the heated portions 446, 448 in a non-oxidizing atmosphere to the hot working temperature. It will also be understood that a container or cover for holding the non-oxidizing atmosphere in place over the heated portions is omitted from Fig. 10A.

A tooth 438A of the first gear 436A engages the projection 472 to urge the jig 484A away from the first gear's axis 440A, and at the same time, a tooth space 476B of the second gear 436B is positioned to receive the second projection 474, to enable the jig 484A to move away from the first gear's axis 440A and toward the second gear's axis 440B (Figs. 10A, 10B). The jig 484A is moved in the direction indicated by arrow "4D₁" in Fig. 10B.

The gears 436A, 436B rotate in the directions indicated by arrows 478A, 478B respectively (Fig. 10B). The gears 436A, 436B rotate simultaneously in the same direction relative to their respective axes. A tooth of the second gear 436B engages the second projection 474 and when a tooth space of the first gear 436A is positioned to receive the first projection 472 (not shown in Fig. 10B). The alternating engagement of the teeth with the opposed sides of the jig 484A causes oscillation of the jig 484A along the predetermined oscillation path, as indicated by arrow "K₁" in Fig. 10A.

As noted above, one or both of the workpieces 422, 424 may be moved relative to the other. As an example, in Fig. 10A, both of the workpieces 422, 424 are oscillated, as indicated by arrows "K₁" and "K₂" respectively.

In the same manner as described above, the heating elements (not shown) heat the heated portions 446, 448 of the first and second workpieces 422, 424 to their hot working temperatures. The heating elements are then removed, and preferably while one or both of the workpieces 422, 424 are oscillating relative to the other, and also while the heated portions are at their hot working temperatures, the workpieces 422, 424 are pressed together, to bond the first and second workpieces 422, 424 together at their respective engaged surfaces 454, 456.

In one embodiment, one or both of the workpieces 422, 424 are oscillated relative to the other before the heated portions are engaged. Alternatively, one or both of the workpieces 422, 424 may be oscillated relative to the other after the heated portions are engaged.

Once the heated portions are engaged or pressed together (while at the same time also oscillation is taking place, and the heated portions are at the hot working temperature), the heated portions 446, 448 are at least partially subject to plastic deformation, resulting in recrystallization of the deformed material on cooling, bonding the workpieces 422, 424 together.

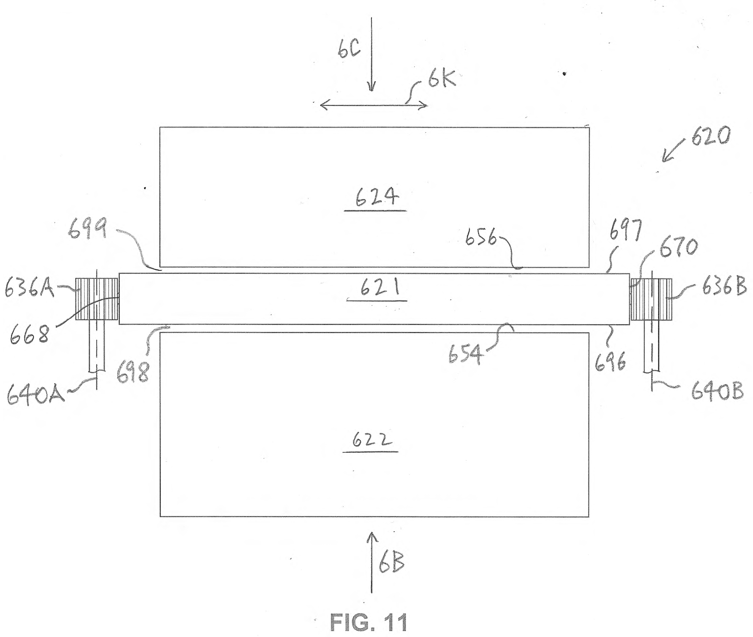

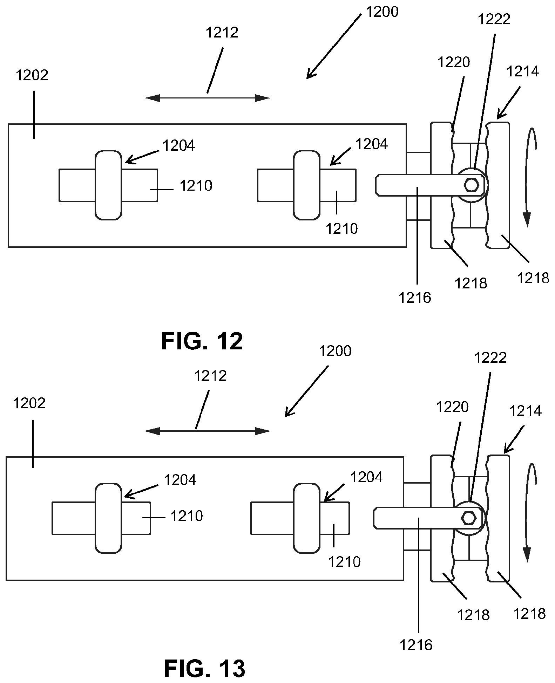

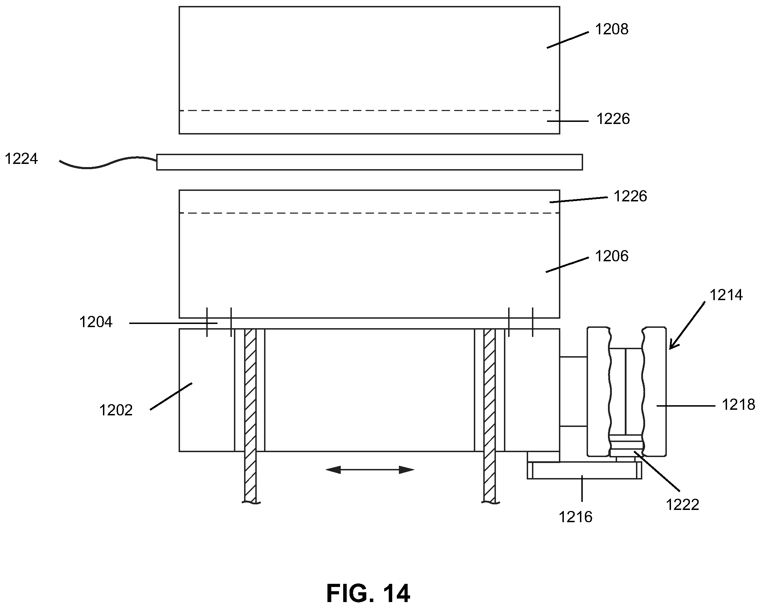

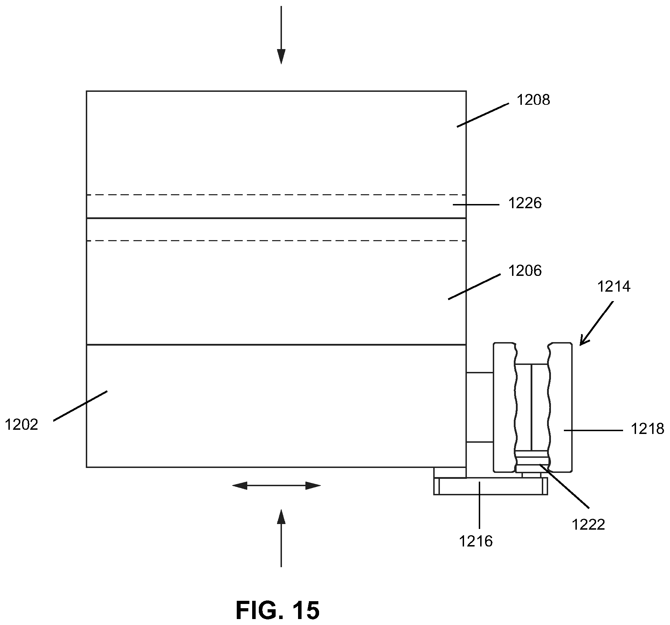

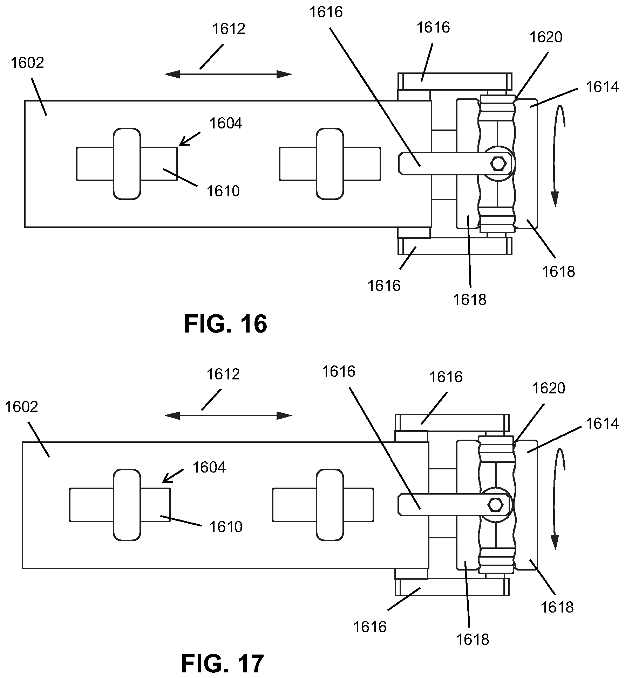

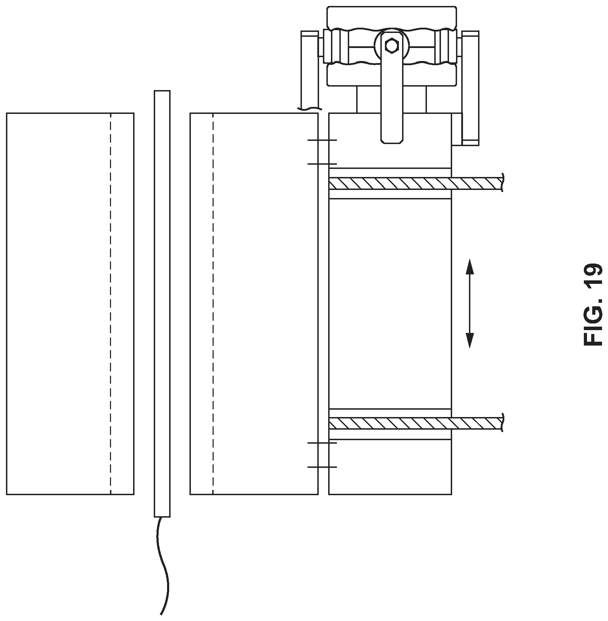

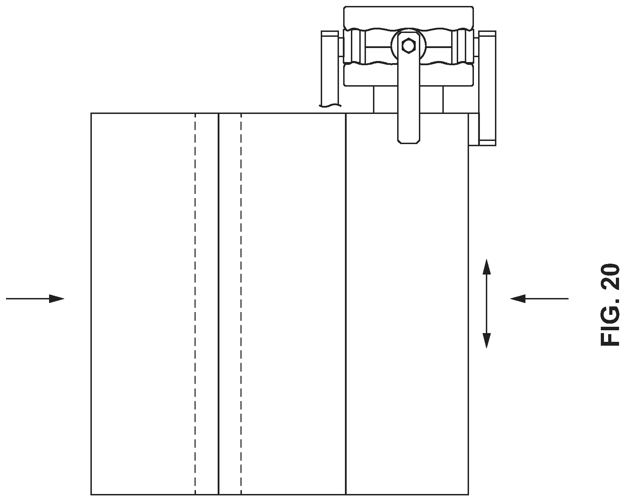

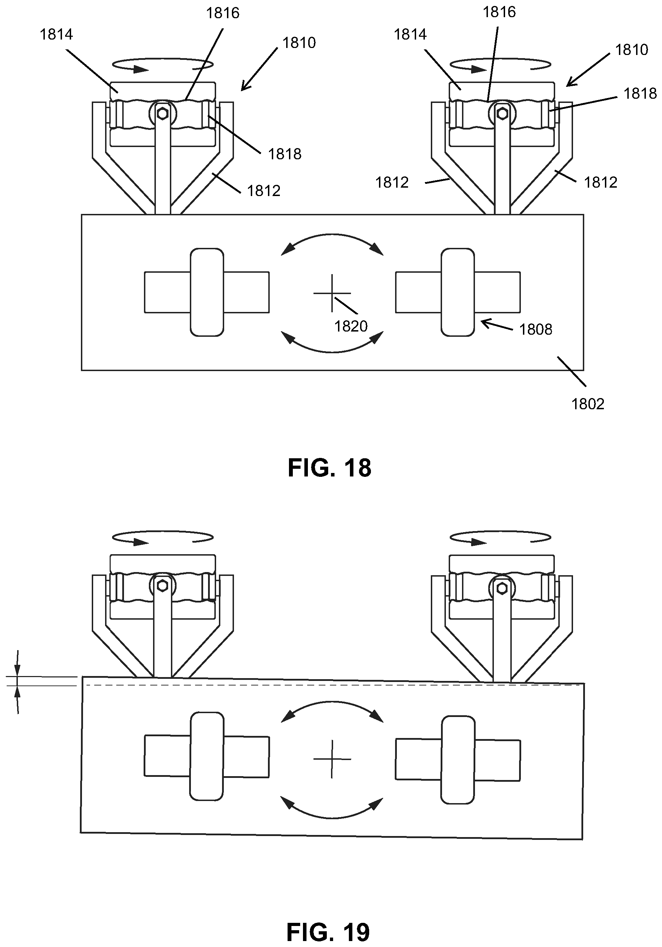

In Fig. 11, another embodiment of the system 620 of the disclosure includes gears 636A, 636B positioned for engagement with first and second sides 668, 670 respectively of an insert 621. The insert 621 also has first and second long sides 696, 697, as will be described.

As can be seen in Fig. 11, the insert 621 is positioned in a gap that is defined between a first surface 654 of a first workpiece 622 and a second surface 656 of a second workpiece 624. As can be seen in Fig. 11, when the insert 621 is positioned between the surfaces 654, 656 of the workpieces 622, 624, spaces 698, 699 are defined between the first long side 696 and the first surface 654, and also between the second long side 697 and the second surface 656.

It will be understood that heating elements (not shown) are positioned in the gaps 698, 699, to heat heated portions of the workpieces 622, 624 and the insert 621 to their hot working temperatures. As described above, such heating is done in a non-oxidizing atmosphere. The heated portions of the workpieces 622, 624 are identified by reference characters 646, 648 respectively. The heated portions of the insert 621 are identified in Fig. 11 by reference characters 601, 602.

In the matter described above, the gears 636A, 636B are rotated about their respective axes 640A, 640B, causing the insert 621 to oscillate, as indicated by arrow "6K". The heating elements (not shown) are energized, to heat the heated portions 646, 648, 601, 602 in a non-oxidizing atmosphere. The heated portions are subject to plastic deformation, when the heated portions are at their hot working temperatures.

It will be understood that the heating elements and a container or cover for containing the non-oxidizing atmosphere are omitted from Fig. 11 for clarity of illustration.

Next, the heating elements are removed. While the heated portions are at the hot working temperature, and while the insert 621 is oscillating relative to the first and second workpieces 622, 624, the surface 654 is pressed against the first long side 696 of the insert 621, and the surface 656 is pressed against the second long side 697 of the insert 621. The pressure exerted is schematically represented by arrows "6B" and "6C".

The oscillation of the insert 621 continues for a short time period after engagement of the surfaces 654, 656 with the long sides 696, 697 respectively. As a result, the heated portions are subjected to plastic deformation, i.e., the material in the heated portions is subjected to shearing, and becomes fused or bonded together. Subsequently, the heated portions are allowed to cool.

From the foregoing, it can be seen that the insert 621 may be caused to oscillate relative to the workpieces 622, 624 by any suitable means. It will be understood that more than one gear may engage the insert 621, e.g., by engaging gears with the insert 621 along exterior sides (not shown) of the insert 621, or by stacking a number of gears (i.e., with their axes aligned) to engage the gears with the insert 621.

It will also be understood that one or both of the workpieces 622, 624 may also be oscillated relative to the insert 621. Such oscillation may be caused by gears (not shown in Fig. 11) engaging one or both of the workpieces 622, 624, as described above.

It will be appreciated by those skilled in the art that the disclosure can take many forms, and that such forms are within the scope of the disclosure as claimed. The scope of the claims should not be limited by the preferred embodiments set forth in the examples, but should be given the broadest interpretation consistent with the description as a whole.

## Claims

1. A system for bonding a first metal workpiece and a second metal workpiece together, the system comprising:
a platform to which the first workpiece is securable;
a locating assembly for locating the second workpiece in a predetermined position relative to the first workpiece to define a gap therebetween;
at least one heating element positionable in the gap for heating respective heated portions of the first and second workpieces to a hot working temperature at which the heated portions are at least partially plastically deformable;
a drive mechanism, comprising at least one rotatable gear positioned for engagement with the platform, for causing oscillating movement of the platform along a predetermined oscillation path; and
an apparatus for urging the first and second workpieces against each other while the heated portions are at their hot working temperatures and the platform is oscillated, to bond the workpieces together.

2. A system according to claim 1, further comprising a frame and at least one fastener assembly connecting the platform to the frame, said at least one fastener assembly permitting the platform to move relative to the frame along the predetermined oscillation path.

3. A system according to claim 1 or 2, wherein the platform includes at least one projection on one side thereof, and wherein the at least one gear includes a set of gear teeth and teeth gaps for receiving the projection, whereby rotation of the at least one gear causes the projection to travel between the set of gear teeth and teeth gaps to generate the oscillating movement.

4. A system according to any preceding claim, wherein the drive mechanism further comprises a second gear positioned for engagement with a second side of the platform opposite the first side, the first and second gears being coordinated to cause oscillation of the platform.

5. A system according to any of claims 1 to 3, wherein the drive mechanism comprises a first gear positioned for engagement with a first side of the platform for intermittent movement of the platform in a first direction, and wherein the system further comprises a resilient element positioned for engagement with a second side of the platform opposite the first side, for resiliently responding to the movement of the platform in the first direction by urging the platform in a second direction opposite to the first direction.

6. A system according to claim 1, wherein the predetermined oscillation path is a non-linear path configured to correspond to a curved surface of one of the workpieces.

7. A system according to claim 1, wherein the drive mechanism is configured to cause the platform to oscillate by pivoting about a central pivot point

8. A system for bonding a first metal workpiece and a second metal workpiece together, the system comprising:
a frame;
a platform to which the first workpiece is securable;
at least one fastener assembly connecting the platform to the frame, said at least one fastener assembly permitting the platform to move relative to the frame along a predetermined oscillation path;
a locating assembly, for locating the second workpiece in a predetermined position relative to the first workpiece to define a gap therebetween when the first workpiece is secured to the platform;
at least one gear including a plurality of teeth and mounted for rotation about an axis thereof, said at least one gear being positioned for engagement with the platform, for oscillating movement of the platform along the predetermined oscillation path;
at least one heating element, to be positioned in the gap, for heating respective heated portions of the first and second workpieces to their hot working temperatures at which the heated portions are at least partially plastically deformable, said at least one heating element being removable from the gap when the heated portions are at their hot working temperatures; and
apparatus for urging the first and second workpieces against each other, while the heated portions are at their hot working temperatures and while the first workpiece is oscillated along the predetermined oscillation path, to bond the first and second workpieces together.

9. A system according to claim 8 in which said at least one gear comprises:
a first gear positioned for engagement with a first side of the platform; and
a second gear positioned for engagement with a second side of the platform that is opposite to the first side thereof;
the first and second gears being coordinated to cause oscillation of the platform along the predetermined oscillation path.

10. A system according to claim 8 in which said at least one gear comprises a first gear positioned for engagement with a first side of the platform, for intermittent movement of the platform in a first direction; and
the system additionally comprises a resilient element positioned for engagement with a second side of the platform that is opposed to the first side thereof, for resiliently responding to the movement of the platform in the first direction by urging the platform in a second direction opposite to the first direction.

11. A system for bonding a first metal workpiece to a second metal workpiece comprising:
a platform for receiving the first metal workpiece, the platform including at least one projection on one side of the platform;
a locating assembly for receiving the second metal workpiece and for locating the second metal workpiece in a predetermined position to define a gap between the first and second metal workpieces;
at least one gear positioned to a side of the platform, the at least one gear including a set of gear teeth and teeth gaps between the set of gear teeth for receiving the projection;
an apparatus for rotating the at least one gear causing the projection to travel between the set of gear teeth and teeth gaps;
at least one heating element located in the gap between the first and second metal workpieces to heat heated portions of the first and second metal workpieces to their hot working temperatures;
wherein when the heated portions are at their hot working temperatures. rotation of the at least one gear causes the platform to move along a predetermined oscillation path causing edges of the first and second metal workpieces to bond or fuse together.

12. The system of Claim 11 further comprising:
an apparatus for forcing the first and second metal workpieces together while the edges of the first and second metal workpieces are bonding or fusing together.

13. The system of Claim 11 further comprising:
a second projection located on a side of the platform opposite the at least one projection; and
a second gear, the second located on a side of the platform opposite the at least one gear, the second gear including a set of gear teeth and teeth gaps between the set of gear teeth for receiving the second projection; and
a second apparatus for rotating the at second gear causing the second projection to travel between the set of gear teeth and teeth gaps of the second gear.

14. The apparatus of Claim 13 wherein when the at least one projection is located in one of the teeth gaps for the at least one gear, the second projection abuts one of the gear teeth of the second gear.

15. The apparatus of Claim 13 wherein when the at least one projection is located in one of the teeth gaps for the at least one gear, the second projection is located in one of the teeth gaps of the second gear.
